Europäisches Patentamt

European Patent Office

Office européen des brevets

(11) Veröffentlichungsnummer: **0 184 983**
**A1**

## (12) EUROPÄISCHE PATENTANMELDUNG

(21) Anmeldenummer: 85810516.6

(22) Anmeldetag: 06.11.85

(51) Int. Cl.⁴: **B 28 D 7/00**, B 28 D 1/14

(30) Priorität: 29.11.84 DE 3443590

(43) Veröffentlichungstag der Anmeldung: 18.06.86
Patentblatt 86/25

(84) Benannte Vertragsstaaten: CH DE FR GB IT LI NL SE

(71) Anmelder: HILTI Aktiengesellschaft, FL-9494 Schaan (LI)

(72) Erfinder: Baetschmann, Daniel, Fluxstrasse 555,
FL-9492 Eschen (LI)
Erfinder: Nipp, Hansjörg, Morgengab 578,
FL-9293 Mauren (LI)
Erfinder: Blaas, Karl, Werdenberg 36, CH-9470 Buchs
(CH)

(74) Vertreter: Wildi, Roland, Hilti Aktiengesellschaft
Patentabteilung, FL-9494 Schaan (LI)

(54) Zusatzvorrichtung beim Bohren von Stahlbeton.

(57) Verfahren zum Herstellen von Ausnehmungen in Bau-materialien (15), die mit Eisenarmierungen (16) versehen sind. Während des Bohrvorganges wird der elektrische Widerstand des Baumaterials (15) zwischen dem Werkzeug (14) und den Armierungseisen (16) laufend gemessen. Trifft das Werkzeug (14) auf ein Armierungseisen (16), so wird der Messkreis kurzgeschlossen, so dass der elektrische Widerstand abfällt. Dieser Widerstandsabfall kann als Signal zum Abschalten, Auskuppeln oder Bremsen des Gerätes verwendet werden.

- 2 -

0184983

HILTI AKTIENGESELLSCHAFT IN SCHAAN
Fürstenstum Liechtenstein

BEZEICHNUNG GEÄNDERT

## Verfahren zum Herstellen von Ausnehmungen

Die Erfindung betrifft ein Verfahren zum Herstellen von Ausnehmungen in Eisenarmierungen aufweisenden Baumaterialien, wie Beton, Gestein und dergleichen, mittels in Handgeräte eingesetzter Bohr-, Fräs- oder Meisselwerkzeuge.

Zum Herstellen von Ausnehmungen, wie Bohrungen, Nuten oder dergleichen, werden heute neben sogenannten Mauerfräsen vor allem Bohr- oder Meisselhämmer verwendet. Diese Geräte arbeiten meist nach dem elektropneumatischen System und weisen gegenüber den früher üblichen Schlagbohrmaschinen eine wesentlich höhere Abbauleistung auf.

Ein bisher ungelöstes Problem bei der Herstellung solcher Ausnehmungen mittels dieser Geräte entsteht beim Auftreffen der Werkzeuge auf die von aussen meistens nicht ersichtlichen Armierungseisen. Durch die Schlagenergie werden die Werkzeuge beim Auftreffen auf Armierungseisen sehr schnell beschädigt und können nach kurzer Zeit unbrauchbar werden.

0184983

Bekannt sind zwar Eisensuchgeräte, mit denen im Baumaterial enthaltene Armierungseisen aufgespürt werden sollen. Diese Geräte sind jedoch sehr ungenau und praktisch nur zum Aufspüren von unmittelbar unter der Oberfläche liegenden Armierungseisen geeignet. Ausserdem sind sie sehr störungsempfindlich und somit für den rauhen Einsatz auf der Baustelle praktisch nicht geeignet.

Weitere aufwendigere Möglichkeiten wie Röntgentechnik, Ultraschallverfahren oder dergleichen kommen aus praktischen und wirtschaftlichen Gründen kaum in Frage.

Der Erfindung liegt die Aufgabe zugrunde, ein wirtschaftliches und funktionstüchtiges Verfahren zum Herstellen von Ausnehmungen in Eisenarmierungen aufweisenden Baumaterialien zu schaffen.

Gemäss der Erfindung wird dies dadurch erreicht, dass der elektrische Widerstand des Baumaterials zwischen dem Werkzeug und den Armierungseisen gemessen und der bei Berührung des Werkzeuges mit den Armierungseisen erfolgende Widerstands-Abfall als Signal für geräteseitige Steuerfunktionen verwendet wird.

Im Unterschied zu den bisher üblichen Methoden werden die Armierungseisen also nicht vor Beginn des Bohrvorganges aufgespürt, sondern es wird erst festgestellt, wenn eine Berührung des Werkzeuges mit einem der Armierungseisen stattgefunden hat. Da bereits die erste Berührung ein entsprechendes Signal auslöst, können durch sofortiges Reagieren Folgeschäden verhindert werden. Das erfindungsgemässe Verfahren beruht beispielsweise auf einer ohm'schen Widerstandsmessung. Daneben ist es jedoch auch möglich, mittels Wechselstrom den kapazitiven oder den induktiven Widerstand bzw die Impedanz zu messen. Eine solche Widerstandsmessung kann mit geringer Spannung und ungefährlich kleinen Strömen durchgeführt werden. Beispielsweise ausgehärteter Beton ist je nach Feuchtigkeitsgehalt mehr oder weniger elektrisch leitfähig. Im Verhältnis zum Widerstand von Metallen ist

0184983

derjenige von Beton jedoch wesentlich grösser. Trifft nun das
Werkzeug auf ein Armierungseisen, dh berühren sich die beiden
Metalle, so wird der Messkreis praktisch kurzgeschlossen, was
durch einen plötzlichen Widerstands-Abfall feststellbar ist. Das
dabei entstehende Signal kann für geräteseitige Steuerfunktionen,
wie beispielsweise Abschalten des Gerätes vom Versorgungsnetz,
Betätigen einer Kupplung, Bremse oder dergleichen, verwendet werden. Das Kurzschliessen des Stromkreises kann beispielsweise
durch ein Messgerät, eine Signallampe oder ein akustisches Signal zusätzlich angezeigt werden. Eine solche Anzeige kann der
Bedienungsperson als Aufforderung für eine bestimmte Handlungsweise dienen.

Bei den gängigen Geräten der in Rede stehenden Art unterscheidet
man im wesentlichen zwei Schutzklassen. Bei Geräten nach der
Schutzklasse I, welche auch als Schutzerdung bezeichnet wird,
sind die elektrisch leitenden Teile, wie Gehäuse, Spindel, Getriebe und dergleichen, untereinander und mit der Erde verbunden.
Diese Erdung kann beispielsweise durch den Erdleiter des elektrischen Stromversorgungsnetzes erfolgen. Stationäre Maschinen
können auch direkt, beispielsweise über eine metallene Wasserleitung, geerdet werden.

Bei der Schutzklasse II, welche auch als Schutzisolierung bezeichnet wird, sind wenigstens der Motor oder das ganze Gehäuse
von einem Isolationsmantel umgeben. Weist das Gerät ein Getriebe
auf, so muss auch die mechanische Verbindung zwischen dem Motor
und dem Getriebe elektrisch isoliert ausgebildet werden.

Für das Messen des elektrischen Widerstandes des Baumaterials
bestehen je nach Art der Bauwerke verschiedene Möglichkeiten.
Eine sichere und in vielen Fällen zweckmässige Lösung besteht
darin, dass die Messung des Widerstandes über eine direkte elektrische Verbindung mit den Armierungseisen erfolgt.

0184983

Eine solche elektrische Verbindung vom Werkzeug über eine Messschaltung zu den Armierungseisen kann beispielsweise mittels
eines aus dem Bauwerk ragenden Armierungseisens hergestellt
werden. Eine weitere Möglichkeit besteht darin, das Bauwerk an
einer Stelle anzubohren, an der mit grosser Wahrscheinlichkeit
ein Armierungseisen angeordnet ist. Die elektrische Verbindung
mit den im Bauwerk angeordneten Armierungseisen kann in diesem
Fall beispielsweise mittels eines Metalldübels hergestellt werden.
Der Metalldübel übernimmt die Funktion einer Elektrode, welche
den Kontakt mit den Armierungseisen herstellt. Das System funktioniert jedoch nur für eine Gruppe von Armierungseisen, welche
untereinander elektrisch leitend verbunden sind. Bei diesem Messsystem, das für Geräte der Schutzklasse I und II angewendet werden kann, ist zusätzlich zu dem der Stromversorgung dienenden
Netzkabel eine flexible Leitung erforderlich.

Die Vorschriften für die Ausführung der Eisenarmierungen sind je
nach Art des Bauwerkes national sehr unterschiedlich. So müssen
beispielsweise in einigen Ländern die Armierungseisen von öffentlichen Gebäuden aus Gründen der Unfallverhütung, des Blitz- und/
oder des Korrosionsschutzes untereinander elektrisch leitend
verbunden und ausserdem geerdet werden. In diesem Fall ist es
vorteilhaft, wenn die Messung des Widerstandes über eine Erdung
der Armierungseisen erfolgt. Das zeitaufwendige Suchen eines
Armierungseisens zwecks Herstellung eines elektrischen Kontaktes
fällt somit weg. Für die Funktion dieses Systems ist lediglich
eine Erdung der Messschaltung erforderlich. Da diese Erdung nicht
den sehr hohen Ansprüchen einer Schutzerdung entsprechen muss,
kann diese auf relativ einfache Weise mittels einer metallischen
Wasserleitung oder einer ins Erdreich eingebrachten Elektrode
erfolgen. Auch dieses System eignet sich für Geräte nach der
Schutzklasse I und II.

Sind die Armierungseisen untereinander elektrisch leitend verbunden und geerdet und weist ausserdem das Stromversorgungsnetz
einen geerdeten Schutzleiter auf, so kann bei Verwendung eines
Gerätes nach der Schutzklasse I die Messung des Widerstandes

0184983

zweckmässigerweise über den Schutzleiter des Gerätes und das netzseitige, mit den Armierungseisen verbundene Erdleiter-System erfolgen. Der sich beim Treffen des Werkzeuges auf ein Armierungseisen schliessende Messkreis benützt dabei die Erdung des Gerätes und diejenige der Armierungseisen. Die Zuverlässigkeit der Messung ist somit weitgehend vom Baugrund abhängig. So funktioniert das System insbesondere im Grundwasserbereich relativ sicher, während der Erdungswiderstand im Bereich trockenen Sandes eher hoch ist. Das System ist jedoch besonders einfach, da es neben der ohnehin erforderlichen Stromversorgung praktisch keine zusätzlichen Installationen notwendig macht.

Die Funktionsfähigkeit des Messsystems kann bei allen drei Methoden auf sehr einfache Weise geprüft werden, indem entweder der Erdleiterkontakt oder die zusätzliche elektrische Verbindung mit dem Werkzeug in Kontakt gebracht und der Messkreis somit kurzgeschlossen wird. Zur Vereinfachung der Kontrolle kann das Gerät auch mit einer diese Schaltung vornehmenden Prüftaste versehen werden.

Die Erfindung soll nachstehend anhand der sie beispielsweise wiedergebenden Zeichnungen näher erläutert werden. Es zeigen:

Fig. 1    ein Bohrgerät nach der Bauart der Schutzklasse II, beim Anbohren eines mit Armierungseisen versehenen Bauwerkes, mit direkter elektrischer Verbindungsleitung zu den Armierungseisen,

Fig. 2    ein Bohrgerät nach der Bauart der Schutzklasse II, beim Anbohren eines mit Armierungseisen versehenen Bauwerkes, mit geerdeter Verbindungsleitung,

Fig. 3    ein Bohrgerät nach der Bauart der Schutzklasse I, mit im Netzkabel verlaufendem Erdleiter, beim Anbohren eines mit Armierungseisen versehenen Bauwerkes.

0184983

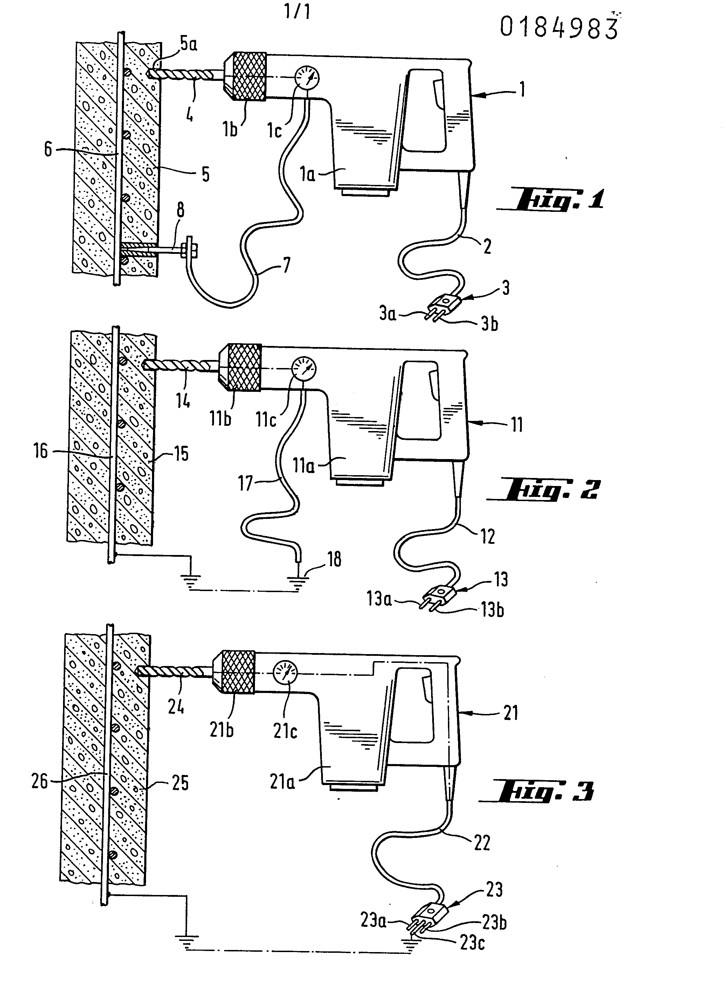

Das aus Fig. 1 ersichtliche, insgesamt mit 1 bezeichnete Bohrgerät besteht im wesentlichen aus einem Gehäuse 1a und einem damit verbunden Werkzeughalter 1b. Ein flexibles Netzkabel 2 stellt die Verbindung zum Stromversorgungsnetz her. Am freien Ende des Netzkabels 2 befindet sich ein insgesamt mit 3 bezeichneter Stecker. Der Stecker 3 weist einen Phase-Stift 3a und einen Nullleiter-Stift 3b auf. Das Bohrgerät 1 ist nach der Schutzklasse II ausgerüstet. Es kann jedoch ebenso ein Gerät nach der Schutzklasse I verwendet werden. Die konstruktive Ausbildung des Steckers 3 ist in den nationalen Vorschriften entsprechend unterschiedlich und lediglich beispielhaft dargestellt. Ein Werkzeug 4 ist in den Werkzeughalter 1b des Bohrgerätes eingesetzt. Das Werkzeug 4 befindet sich in einem Bohrvorgang zur Herstellung einer Aufnahmebohrung 5a in einem insgesamt mit 5 bezeichneten Baumaterial, das mit Armierungseisen 6 versehen ist. Die Armierungseisen 6 sind untereinander elektrisch leitend verbunden. Am Gehäuse 1a des Bohrgerätes 1 befindet sich ein Messgerät 1c. Dieses Messgerät 1c ist über eine flexible Leitung 7 und einen Metall-Spreizdübel 8 mit den Armierungseisen 6 elektrisch leitend verbunden und misst laufend den elektrischen Widerstand des Baumaterials 5 zwischen dem Werkzeug 4 und den Armierungseisen 6. Trifft das Werkzeug 4 auf eines der Armierungseisen 6, so sinkt dieser Widerstand praktisch auf Null ab. Dies kann einerseits am Messgerät 1c optisch abgelesen werden. Der Widerstands-Abfall kann jedoch auch beispielsweise mittels einer Lampe oder eines deutlich hörbaren akustischen Signals angezeigt werden. Weiterhin ist es möglich, dieses Signal beispielsweise zum Abschalten der Stromzufuhr, zum Auslösen einer Kupplung oder Betätigen einer Bremse zu verwenden.

Das aus Fig. 2 ersichtliche, insgesamt mit 11 bezeichnete Bohrgerät entspricht weitgehend demjenigen gemäss Fig. 1. Dabei kann es sich ebenfalls um ein der Schutzklasse I oder II entsprechendes Gerät handeln. Das Bohrgerät 11 weist ein Gehäuse 11a und einen damit verbundenen Werkzeughalter 11b auf und ist über ein Netzkabel 12 mit dem Stromversorgungsnetz verbunden. Der am freien Ende des

0184983

Netzkabels 12 angeordnete, insgesamt mit 13 bezeichnete Stecker weist zwei Kontaktstifte 13a, 13b auf, welche im allgemeinen wahlweise mit der Phase oder dem Nulleiter des Stromversorgungssystems verbunden werden können. Ein Werkzeug 14 ist in den Werkzeughalter 11b eingesetzt und im Begriffe, ein mit Armierungseisen 16 versehenes Baumaterial 15 anzubohren. Im Unterschied zu Fig. 1 sind die Armierungseisen 16 jedoch geerdet. Der sich beim Treffen des Werkzeuges 14 auf ein Armierungseisen 16 schliessende Messkreis wird auch in diesem Fall über eine zusätzliche, flexible Verbindungsleitung 17 hergestellt. Die Vebindung des am Gehäuse 11a angeordneten Messgerätes 11c mit den Armierungseisen 16 erfolgt jedoch nicht direkt, sondern über eine Erdung 18, an welche die Verbindungsleitung 17 angeschlossen ist. Die erwähnten Möglichkeiten zur Auswertung des beim Widerstands-Abfall erfolgenden Signals gelten auch für diese Ausführung. Das Messgerät 11c bzw eine entsprechende Schalteinrichtung kann an einer beliebigen Stelle der Verbindungsleitung 17 angeordnet werden.

Bei dem aus Fig. 3 ersichtlichen, insgesamt mit 21 bezeichneten Bohrgerät handelt es sich um ein Gerät gemäss der Schutzklasse I. Das Bohrgerät 21 weist ein Gehäuse 21a und einen damit verbundenen Werkzeughalter 21b auf. Das Bohrgerät 21 ist über ein Netzkabel 22 mit dem Stromversorgungsnetz verbunden. Der am freien Ende des Netzkabels 22 angeordnete, insgesamt mit 23 bezeichnete Stecker weist im Unterschied zu denjenigen gemäss den Fig. 1 und 2 drei Kontaktstifte 23a, 23b und 23c auf. Die Kontaktstifte 23a und 23b werden mit der Phase oder dem Nulleiter des Stromversorgungssystems verbunden. Der Kontaktstift 23c dient als Schutzleiter und ist mit der Erdung des Stromversorgungsnetzes verbunden. Ein Werkzeug 24 ist in den Werkzeughalter 21b eingesetzt und im Begriffe, ein mit Armierungseisen 26 versehenes Baumaterial 25 anzubohren. Die Armierungseisen 26 sind ebenfalls geerdet. Die Verbindung des Messkreises erfolgt somit über den Schutzleiter des Gerätes und die Erdungen des Stromversorgungsnetzes sowie der Armierungseisen 26. Eine separate Verbindungsleitung ist daher nicht erforderlich.

0184983

HILTI AKTIENGESELLSCHAFT IN SCHAAN
Fürstentum Liechtenstein

Patentansprüche

1. Verfahren zum Herstellen von Ausnehmungen in Eisenarmierungen aufweisenden Baumaterialien, wie Beton, Gestein und
dgl., mittels in Handgeräte eingesetzter Bohr- oder Meisselwerkzeuge, d a d u r c h   g e k e n n z e i c h n e t ,
dass der elektrische Widerstand des Baumaterials (5, 15,
25) zwischen dem Werkzeug (4, 14, 24) und den Armierungseisen (6, 16, 26) gemessen und der bei Berührung des Werkzeuges (4, 14, 24) mit den Armierungseisen (6, 16, 26) erfolgende Widerstands-Abfall als Signal für geräteseitige
Steuerfunktionen verwendet wird.

2. Verfahren nach Anspruch 1, dadurch gekennzeichnet, dass die
Messung des Widerstandes über eine direkte elektrische Verbindung (7) mit den Armierungseisen (6) erfolgt.

3. Verfahren nach Anspruch 1, dadurch gekennzeichnet, dass die
Messung des Widerstandes über eine Erdung der Armierungseisen (16, 26) erfolgt.

4. Verfahren nach Anspruch 3, dadurch gekennzeichnet, dass die
Messung des Widerstandes über den Schutzleiter (23c) des
Gerätes und das netzseitige, mit den Armierungseisen (26)
verbundene Erdleiter-System erfolgt.

1/1                    0184983

**Fig. 1**

**Fig. 2**

**Fig. 3**

0184983
Nummer der Anmeldung

**Europäisches Patentamt**

# EUROPÄISCHER RECHERCHENBERICHT

| EINSCHLÄGIGE DOKUMENTE | | | EP 85810516.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 3 207 747 (WURMBACH)<br>* Seite 5, Zeilen 3-16 *<br>-- | 1-4 | B 28 D 7/00<br>B 28 D 1/14 |
| A | DE - B1 - 2 723 820 (UHLMANN...)<br>* Spalte 3, Zeilen 9-16 *<br>---- | | |

|  |  | RECHERCHIERTE SACHGEBIETE (Int. Cl.4) |
|---|---|---|
|  |  | A 63 B<br>B 23 B<br>B 25 D<br>B 28 D |

Der vorliegende Recherchenbericht wurde für alle Patentansprüche erstellt.

| Recherchenort | Abschlußdatum der Recherche | Prüfer |
|---|---|---|
| WIEN | 28-02-1986 | GLAUNACH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82